# EUROPEAN PATENT APPLICATION

(11) **EP 4 044 592 A2**
(43) Date of publication of application: **17.08.2022**
(21) Application number: 22160799.7
(22) Date of filing: 21.08.2020
(51) Int. Cl.: H04N 19/103, H04N 19/157, H04N 19/186, H04N 19/119, H04N 19/96, H04N 19/176

(54) **METHOD AND APPARATUS OF PARTITIONING SMALL SIZE CODING UNITS WITH PARTITION CONSTRAINTS**

(30) Priority: 23.08.2019 US 201962890723 P; 26.09.2019 US 201962906435 P
(62) Divisional of application: 20858138.9
(71) Applicant: HFI Innovation Inc., Hsinchu County 302 (TW)
(72) Inventor: LIN, Zhi-Yi, Hsinchu City (TW); CHUANG, Tzu-Der, Hsinchu City (TW); CHEN, Ching-Yeh, Hsinchu City (TW)
(74) Representative: Patentship Patentanwaltsgesellschaft mbH

(57) **Abstract**

A method and apparatus of video coding are disclosed. According to one method of the present invention, a root block comprising one luma component and one or more chroma components in a 420 or 422 chroma format is received at the encoder side or compressed data comprising the root block at the decoder side. A target mode type is determined for all of the child blocks within the root block when one or more conditions are satisfies. The conditions comprise a child block width equal to 2 or a child block less than 16 for the chroma components. If Intra type mode is not selected for an image area enclosing the root block, the target mode type corresponds to the Intra or Inter type mode and otherwise, the target mode type corresponds to the Intra type mode. The child blocks in the root block are encoded or decoded accordingly.

## Description

### FIELD OF THE INVENTION

The present invention relates to prediction mode selection for small blocks in video coding. In particular, the present invention discloses techniques to improve processing speed for small blocks.

### BACKGROUND AND RELATED ART

The High Efficiency Video Coding (HEVC) standard is developed under the joint video project of the ITU-T Video Coding Experts Group (VCEG) and the ISO/IEC Moving Picture Experts Group (MPEG) standardization organizations, and is especially with partnership known as the Joint Collaborative Team on Video Coding (JCT-VC). In HEVC, one slice is partitioned into multiple coding tree units (CTU). In main profile, the minimum and the maximum sizes of CTU are specified by the syntax elements in the sequence parameter set (SPS). The allowed CTU size can be 8x8, 16x16, 32x32, or 64x64. For each slice, the CTUs within the slice are processed according to a raster scan order.

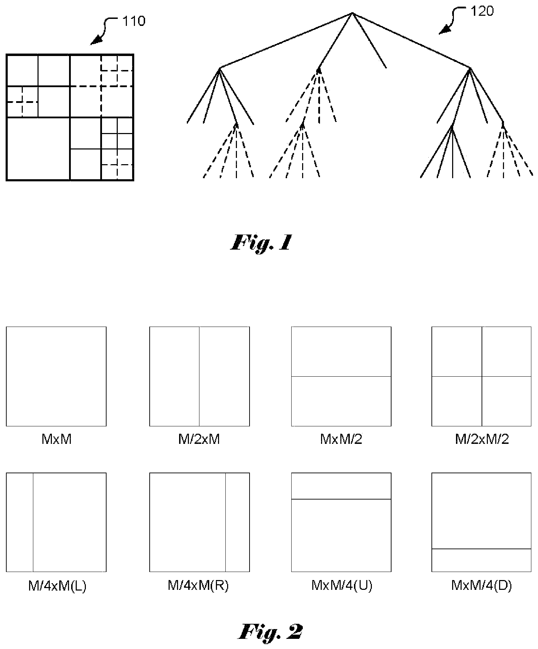

The CTU is further partitioned into multiple coding units (CU) to adapt to various local characteristics. A quadtree, denoted as the *coding tree*, is used to partition the CTU into multiple CUs. Let CTU size be MxM, where M is one of the values of 64, 32, or 16. The CTU can be a single CU (i.e., no splitting) or can be split into four smaller units of equal sizes (i.e., M/2xM/2 each), which correspond to the nodes of the coding tree. If units are leaf nodes of the coding tree, the units become CUs. Otherwise, the quadtree splitting process can be iterated until the size for a node reaches a minimum allowed CU size as specified in the SPS (Sequence Parameter Set). This representation results in a recursive structure as specified by a coding tree (also referred to as a partition tree structure) 120 in Fig. 1. The CTU partition 110 is shown in Fig. 1, where the solid lines indicate CU boundaries. The decision whether to code a picture area using Inter-picture (temporal) or Intra-picture (spatial) prediction is made at the CU level. Since the minimum CU size can be 8x8, the minimum granularity for switching between different basic prediction types is 8x8.

Furthermore, according to HEVC, each CU can be partitioned into one or more prediction units (PU). Coupled with the CU, the PU works as a basic representative block for sharing the prediction information. Inside each PU, the same prediction process is applied and the relevant information is transmitted to the decoder on a PU basis. A CU can be split into one, two or four PUs according to the PU splitting type. HEVC defines eight shapes for splitting a CU into PU as shown in Fig. 2, including MxM, MxM/2, M/2xM, M/2xM/2, MxM/4(U), MxM/4(D), M/4xM(L) and M/4xM(R) partition types. Unlike the CU, the PU may only be split once according to HEVC. The partitions shown in the second row correspond to asymmetric partitions, where the two partitioned parts have different sizes.

After obtaining the residual block by the prediction process based on PU splitting type, the prediction residues of a CU can be partitioned into transform units (TU) according to another quadtree structure which is analogous to the coding tree for the CU as shown in Fig. 1. The solid lines indicate CU boundaries and dotted lines indicate TU boundaries. The TU is a basic representative block having residual or transform coefficients for applying the integer transform and quantization. For each TU, one integer transform having the same size to the TU is applied to obtain residual coefficients. These coefficients are transmitted to the decoder after quantization on a TU basis.

The terms coding tree block (CTB), coding block (CB), prediction block (PB), and transform block (TB) are defined to specify the 2-D sample array of one colour component associated with CTU, CU, PU, and TU, respectively. Thus, a CTU consists of one luma CTB, two chroma CTBs, and associated syntax elements. A similar relationship is valid for CU, PU, and TU. The tree partitioning is generally applied simultaneously to both luma and chroma, although exceptions apply when certain minimum sizes are reached for chroma.

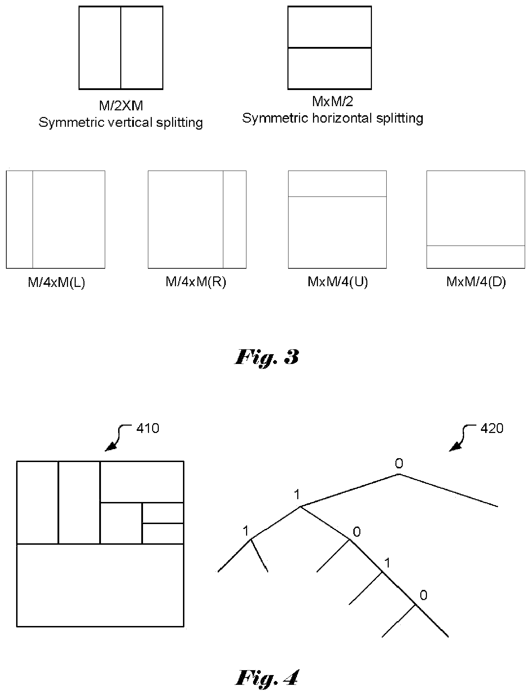

Alternatively, the binary tree partitioning structure is proposed. In the disclosed partitioning process, a block can be split into 2 smaller blocks recursively. Fig. 3 shows different kinds of splitting types. The symmetric horizontal and vertical splitting are the most efficient and simplest ones (i.e., M/2xM and MxM/2), shown in the top two splitting types in Fig. 3. Therefore, as one embodiment, we only use these two splitting types.

For a given block of size MxN, a flag is signalled to indicate whether it is split into two smaller blocks. If the flag indicates splitting, another syntax element is signalled to indicate which splitting type is used. If the horizontal splitting is used then it is split into two blocks of size MxN/2; otherwise it is split into two blocks of size M/2xN. The binary tree splitting process can be iterated until the size (width or height) of a block reaches a minimum allowed block size (width or height) defined in high level syntax such as SPS. Since the binary tree has two splitting types (i.e., horizontal and vertical), the minimum allowed block width and height should be both specified. Horizontal splitting is implicitly prohibited when the splitting results in a block height smaller than the specified minimum height. Similarly, vertical splitting is implicitly prohibited when the splitting results in a block width smaller than the specified minimum width.

Fig. 4 illustrates an example of block partitioning 410 and its corresponding binary tree 420. In each splitting node (i.e., non-leaf node) of the binary tree, one flag is used to indicate which splitting type (horizontal or vertical) is used, where 0 may indicate horizontal splitting and 1 may indicate vertical splitting.

The binary tree structure can be used for partitioning an image area into multiple smaller blocks such as partitioning a slice into CTUs, a CTU into CUs, a CU into PUs, or a CU into TUs, and so on. The binary tree can be used for partitioning a CTU into CUs, where the root node of the binary tree is a CTU and the leaf node of the binary tree is CU. The leaf nodes can be further processed by prediction and transform coding. For simplification, there is no further partitioning from CU to PU or from CU to TU, which means CU equal to PU and PU equal to TU. Therefore, in other words, the leaf node of the binary tree is the basic unit for prediction and transforms coding.

### QTBT Structure

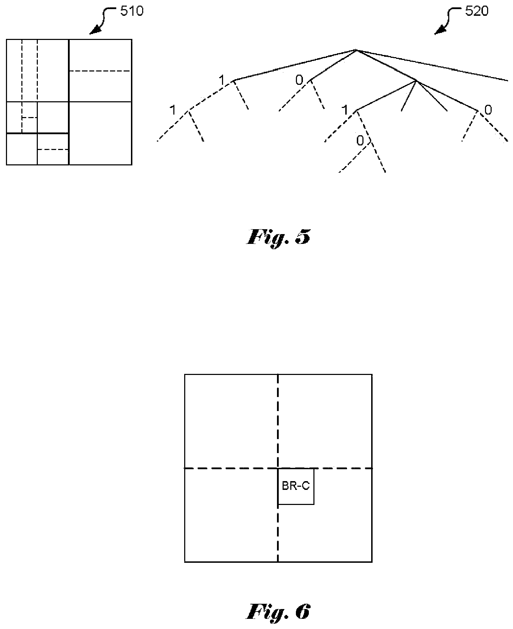

Binary tree structure is more flexible than quadtree structure since more partition shapes can be supported, which is also the source of coding efficiency improvement. However, the encoding complexity will also increase in order to select the best partition shape. In order to balance the complexity and coding efficiency, a method to combine the quadtree and binary tree structure, which is also called as quadtree plus binary tree (QTBT) structure, has been disclosed. According to the QTBT structure, a CTU (or CTB for I slice) is the root node of a quadtree and the CTU is firstly partitioned by a quadtree, where the quadtree splitting of one node can be iterated until the node reaches the minimum allowed quadtree leaf node size (i.e., MinQTSize). If the quadtree leaf node size is not larger than the maximum allowed binary tree root node size (i.e., MaxBTSize), it can be further partitioned by a binary tree. The binary tree splitting of one node can be iterated until the node reaches the minimum allowed binary tree leaf node size (i.e., MinBTSize) or the maximum allowed binary tree depth (i.e., MaxBTDepth). The binary tree leaf node, namely CU (or CB for I slice), will be used for prediction (e.g. Intra-picture or inter-picture prediction) and transform without any further partitioning. There are two splitting types in the binary tree splitting: symmetric horizontal splitting and symmetric vertical splitting. In the QTBT structure, the minimum allowed quadtree leaf node size, the maximum allowed binary tree root node size, the minimum allowed binary tree leaf node width and height, and the maximum allowed binary tree depth can be indicated in the high level syntax such as in SPS. Fig. 5 illustrates an example of block partitioning 510 and its corresponding QTBT 520. The solid lines indicate quadtree splitting and dotted lines indicate binary tree splitting. In each splitting node (i.e., non-leaf node) of the binary tree, one flag indicates which splitting type (horizontal or vertical) is used, 0 may indicate horizontal splitting and 1 may indicate vertical splitting.

The above QTBT structure can be used for partitioning an image area (e.g. a slice, CTU or CU) into multiple smaller blocks such as partitioning a slice into CTUs, a CTU into CUs, a CU into PUs, or a CU into TUs, and so on. For example, the QTBT can be used for partitioning a CTU into CUs, where the root node of the QTBT is a CTU which is partitioned into multiple CUs by a QTBT structure and the CUs are further processed by prediction and transform coding. For simplification, there is no further partitioning from CU to PU or from CU to TU. That means CU equal to PU and PU equal to TU. Therefore, in other words, the leaf node of the QTBT structure is the basic unit for prediction and transform.

An example of QTBT structure is shown as follows. For a CTU with size 128x128, the minimum allowed quadtree leaf node size is set to 16x16, the maximum allowed binary tree root node size is set to 64x64, the minimum allowed binary tree leaf node width and height both is set to 4, and the maximum allowed binary tree depth is set to 4. Firstly, the CTU is partitioned by a quadtree structure and the leaf quadtree unit may have size from 16×16 (i.e., minimum allowed quadtree leaf node size) to 128×128 (equal to CTU size, i.e., no split). If the leaf quadtree unit is 128x128, it cannot be further split by binary tree since the size exceeds the maximum allowed binary tree root node size 64x64. Otherwise, the leaf quadtree unit can be further split by binary tree. The leaf quadtree unit, which is also the root binary tree unit, has binary tree depth as 0. When the binary tree depth reaches 4 (i.e., the maximum allowed binary tree as indicated), no splitting is implicitly implied. When the block of a corresponding binary tree node has width equal to 4, non-horizontal splitting is implicitly implied. When the block of a corresponding binary tree node has height equal to 4, non-vertical splitting is implicitly implied. The leaf nodes of the QTBT are further processed by prediction (Intra picture or Inter picture) and transform coding.

For I-slice, the QTBT tree structure usually applied with the luma/chroma separate coding. For example, the QTBT tree structure is applied separately to luma and chroma components for I-slice, and applied simultaneously to both luma and chroma (except when certain minimum sizes being reached for chroma) for P- and B-slices. In other words, in an I-slice, the luma CTB has its QTBT-structured block partitioning and the two chroma CTBs have another QTBT-structured block partitioning. In another example, the two chroma CTBs can also have their own QTBT-structured block partitions.

### BRIEF SUMMARY OF THE INVENTION

A method and apparatus of video encoding and decoding are disclosed. According to one method of the present invention, a root block comprising one luma component and one or more chroma components in 420 or 422 chroma format is received at the encoder side or compressed data comprising the root block at the decoder side, wherein the root block consists of one or more child blocks resulted from partitioning a coding area using a single partition tree or a partition mode. A target mode type is determined for all of said one or more child blocks within the root block when one or more conditions are satisfies, where said one or more conditions comprise a first width of one child block equal to 2 for said one or more chroma components, and wherein if Intra type mode is not selected for an image area enclosing the root block, the target mode type corresponds to either the Intra type mode or Inter type mode and otherwise, the target mode type corresponds to the Intra type mode. Said one or more child blocks in the root block are encoded at the encoder side or decoded at the decoder side according to the target mode type.

In one embodiment, the first width of one child block for said one or more chroma components equal to 2 corresponds to one condition that a second width of the root block for said one luma component is equal to 8 and the single partition tree or a partition mode for the root block comprises binary vertical partition. In another embodiment, the first width of one child block for said one or more chroma components equal to 2 corresponds to one condition that a second width of the root block for said one luma component is equal to 16 and the single partition tree or a partition mode for the root block comprises ternary vertical partition.

In one embodiment, when the root block is in the 420 chroma format, the first width of one child block for said one or more chroma components equal to 2 corresponds to one condition that the second width and a height of the root block for said one luma component are equal to 8 and 16 respectively and the single partition tree or a partition mode for the root block comprises binary vertical partition, the second width and the height of the root block for said one luma component are equal to 16 and the single partition tree or a partition mode for the root block comprises ternary vertical partition, the second width and the height of the root block for said one luma component are equal to 4 and 32 respectively and the single partition tree or a partition mode for the root block comprises binary or ternary horizontal partition, or the second width and the height of the root block for said one luma component are equal to 4 and 64 respectively and the single partition tree or a partition mode for the root block comprises the ternary horizontal partition.

In one embodiment, when the root block is in the 422 chroma format, the first width of one child block for said one or more chroma components equal to 2 corresponds to one condition that the second width and a height of the root block for said one luma component are equal to 8 and the single partition tree or a partition mode for the root block comprises binary vertical partition, the second width and the height of the root block for said one luma component are equal to 16 and 8 respectively and the single partition tree or a partition mode for the root block comprises ternary vertical partition, the second width and the height of the root block for said one luma component are equal to 4 and 16 respectively and the single partition tree or a partition mode for the root block comprises binary or ternary horizontal partition, or the second width and the height of the root block for said one luma component are equal to 4 and 32 respectively and the single partition tree for the root block comprises the ternary horizontal partition.

In one embodiment, if the Intra type mode is not selected for the image area enclosing the root block, a first syntax is signalled at the encoder side or parsed at the decoder side to indicate either the Intra type mode or the Inter type mode being selected for the root block.

The coding area may correspond to a coding tree unit. The image area may correspond to a slice. In this case, a second syntax in a slice header is signalled at the encoder side or parsed at the decoder side to indicate a coding type of the slice.

According to a first aspect, a method of video coding is provided, the method comprising: receiving a root block at an encoder side or receiving compressed data comprising the root block at a decoder side, wherein the root block consists of one or more child blocks resulted from partitioning a coding area using a partition mode and the root block comprises one luma component and one or more chroma components in a 420 or 422 chroma format; determining a target mode type as intra mode type for all of said one or more child blocks within the root block when one or more conditions are satisfied, wherein said one or more conditions comprise a first width of one child block equal to 2 for said one or more chroma components, and wherein if an Intra type mode is not selected for an image area enclosing the root block, the target mode type corresponds to either the Intra type mode or Inter type mode and otherwise, the target mode type corresponds to the Intra type mode; and encoding said one or more child blocks in the root block according to the target mode type at the encoder side or applying decoding to the compressed data according to the target mode type to reconstruct said one or more child blocks in the root block at the decoder side.

In a first embodiment of the first aspect, the first width of one child block for said one or more chroma components equal to 2 corresponds to one condition that a second width of the root block for said one luma component is equal to 8 and the partition mode for the root block comprises binary vertical partition.

In a second embodiment of the first aspect, the first width of one child block for said one or more chroma components equal to 2 corresponds to one condition that a second width of the root block for said one luma component is equal to 16 and the partition mode for the root block comprises ternary vertical partition.

In a third embodiment of the first aspect, when the root block is in the 420 chroma format, the first width of one child block for said one or more chroma components equal to 2 corresponds to one condition that a second width and a height of the root block for said one luma component are equal to 8 and 16 respectively and the partition mode for the root block comprises binary vertical partition, the second width and the height of the root block for said one luma component are equal to 16 and the partition mode for the root block comprises ternary vertical partition, the second width and the height of the root block for said one luma component are equal to 4 and 32 respectively and the partition mode for the root block comprises binary or ternary horizontal partition, or the second width and the height of the root block for said one luma component are equal to 4 and 64 respectively and the partition mode for the root block comprises the ternary horizontal partition.

In a fourth embodiment of the first aspect, when the root block is in the 422 chroma format, the first width of one child block for said one or more chroma components equal to 2 corresponds one condition that to a second width and a height of the root block for said one luma component are equal to 8 and the partition mode for the root block comprises binary vertical partition, the second width and the height of the root block for said one luma component are equal to 16 and 8 respectively and the partition mode for the root block comprises ternary vertical partition, the second width and the height of the root block for said one luma component are equal to 4 and 16 respectively and the partition mode for the root block comprises binary or ternary horizontal partition, or the second width and the height of the root block for said one luma component are equal to 4 and 32 respectively and the partition mode for the root block comprises the ternary horizontal partition.

In a fifth embodiment of the first aspect, if the Intra type mode is not selected for the image area enclosing the root block, a first syntax is signalled at the encoder side or parsed at the decoder side to indicate either the Intra type mode or the Inter type mode being selected for the root block.

In a sixth embodiment of the first aspect, the coding area corresponds to a coding tree unit.

In a seventh embodiment of the first aspect, the image area corresponds to a slice.

In an example of the seventh example of the first aspect, a second syntax is signalled at the encoder side or parsed at the decoder side in a slice header to indicate a coding type of the slice.

According to a second aspect, an apparatus of video coding is provided, the apparatus comprising one or more electronic circuits or processors arranged to receive a root block at an encoder side or receiving compressed data comprising the root block at a decoder side, wherein the root block consists of one or more child blocks resulted from partitioning a coding area using a single partition tree or a partition mode and the root block comprises one luma component and one or more chroma components in a 420 or 422 chroma format; determine a target mode type for all of said one or more child blocks within the root block when one or more conditions are satisfies, wherein said one or more conditions comprise a first width of one child block equal to 2 for said one or more chroma components, and wherein if an Intra type mode is not selected for an image area enclosing the root block, the target mode type corresponds to either the Intra type mode or Inter type mode and otherwise, the target mode type corresponds to the Intra type mode; and encode said one or more child blocks in the root block according to the target mode type at the encoder side or applying decoding to the compressed data according to the target mode type to reconstruct said one or more child blocks in the root block at the decoder side.

According to a third aspect, a method of video coding is provided, the method comprising: receiving a root block at an encoder side or receiving compressed data comprising the root block at a decoder side, wherein the root block consists of one or more child blocks resulted from partitioning a coding area using a single partition tree or a partition mode and the root block comprises one luma component and one or more chroma components in a 420 or 422 chroma format; determining a target mode type for all of said one or more child blocks within the root block when one or more conditions are satisfied, wherein said one or more conditions comprise a first block size of one child block less than 16 for said one or more chroma components, and wherein if an Intra type mode is not selected for an image area enclosing the root block, the target mode type corresponds to either the Intra type mode or Inter type mode and otherwise, the target mode type corresponds to the Intra type mode; and encoding said one or more child blocks in the root block according to the target mode type at the encoder side or applying decoding to the compressed data according to the target mode type to reconstruct said one or more child blocks in the root block at the decoder side.

In a first embodiment of the third aspect, the first block size of one child block for said one or more chroma components is equal to 4 or 8, and when the root block is in the 420 chroma format, a second block size of the root block for said one luma component is equal to 64 and the single partition tree or the partition mode for the root block comprises quad tree partition, ternary vertical partition, ternary horizontal partition, binary vertical partition, or binary horizontal partition.

In a second embodiment of the third aspect, the first block size of one child block for said one or more chroma components is equal to 8.

In an example of the second embodiment of the third aspect, when the root block is in the 420 chroma format, a second block size of the root block for said one luma component is equal to 128 and the single partition tree or the partition mode for the root block comprises ternary vertical partition or ternary horizontal partition.

In an example of the second embodiment of the third aspect, when the root block is in the 422 chroma format, a second block size of the root block for said one luma component is equal to 64 and the single partition tree or the partition mode for the root block comprises quad tree partition, ternary vertical partition, or ternary horizontal partition.

In an example of the second embodiment of the third aspect, wherein when the root block is in the 422 chroma format, a second block size of the root block for said one luma component is equal to 32 and the single partition tree or the partition mode for the root block comprises binary vertical partition or binary horizontal partition.

In a third embodiment of the third aspect, if the Intra type mode is not selected for the image area enclosing the root block, a first syntax is signalled at the encoder side or parsed at the decoder side to indicate either the Intra type mode or the Inter type mode being selected for the root block.

In a fourth embodiment of the third aspect, the coding area corresponds to a coding tree unit.

In a fifth embodiment of the third aspect, the image area corresponds to a slice.

In an example of the fifth embodiment, a second syntax is signalled at the encoder side or parsed at the decoder side in a slice header to indicate a coding type of the slice.

According to a fourth aspect, an apparatus of video coding is provided, the apparatus comprising one or more electronic circuits or processors arranged to: receive a root block at an encoder side or receiving compressed data comprising the root block at a decoder side, wherein the root block consists of one or more child blocks resulted from partitioning a coding area using a single partition tree or a partition mode and the root block comprises one luma component and one or more chroma components in a 420 or 422 chroma format; determine a target mode type for all of said one or more child blocks within the root block when one or more conditions are satisfies, wherein said one or more conditions comprise a first block size of one child block less than 16 for said one or more chroma components, and wherein if an Intra type mode is not selected for an image area enclosing the root block, the target mode type corresponds to either the Intra type mode or Inter type mode and otherwise, the target mode type corresponds to the Intra type mode; and encode said one or more child blocks in the root block according to the target mode type at the encoder side or apply decoding to the compressed data according to the target mode type to reconstruct said one or more child blocks in the root block at the decoder side.

Another method and apparatus for mode type constraint on small blocks with a single partition tree are also disclosed. According to this method, a target mode type for all child blocks within the root block is determined when one or more conditions are satisfies. The conditions comprise a first block size of one child block less than 16 for the chroma components. If Intra type mode is not selected for an image area enclosing the root block, the target mode type corresponds to either the Intra type mode or Inter type mode and otherwise, the target mode type corresponds to the Intra type mode.

In one embodiment, the first block size of one child block for said one or more chroma components is equal to 4. For example, this condition may correspond to the root block in the 420 chroma format with a block size of 64 and the single partition tree for the root block comprising quad tree partition, ternary vertical partition, ternary horizontal partition, binary vertical partition, or binary horizontal partition.

In another embodiment, the first block size of one child block for said one or more chroma components is equal to 8.

### BRIEF DESCRIPTION OF THE DRAWINGS

Fig. 1 illustrates an example of block partition using quadtree structure to partition a coding tree unit (CTU) into coding units (CUs).
Fig. 2 illustrates asymmetric motion partition (AMP) according to High Efficiency Video Coding (HEVC), where the AMP defines eight shapes for splitting a CU into PU.
Fig. 3 illustrates an example of various binary splitting types used by a binary tree partitioning structure, where a block can be recursively split into two smaller blocks using the splitting types.
Fig. 4 illustrates an example of block partitioning and its corresponding binary tree, where in each splitting node (i.e., non-leaf node) of the binary tree, one syntax is used to indicate which splitting type (horizontal or vertical) is used, where 0 may indicate horizontal splitting and 1 may indicate vertical splitting.
Fig. 5 illustrates an example of block partitioning and its corresponding QTBT, where the solid lines indicate quadtree splitting and dotted lines indicate binary tree splitting.
Fig. 6 illustrates an example of locations of a reference luma block, which can be a first luma block in the root block, the last luma block in the root block, the luma block covering the center position (indicated as BR-C) of the root block.
Fig. 7 illustrates a flowchart of an exemplary coding system with constrained mode selection for small block according to an embodiment of the present invention.
Fig. 8 illustrates another flowchart of an exemplary coding system with constrained mode selection for small block according to an embodiment of the present invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

In Intra prediction, the neighbouring reconstructed samples are used as the reference samples for the current block. If the block size is very small (e.g., the 2x2 chroma CU), the processing throughput is limited because the processor can only predict at most the samples of the current block and no further. If there are multiple small blocks, the processing throughput cannot be improved. Accordingly, in one embodiment of the present invention, it is proposed to share same reference samples within a region to improve the parallel processing.

In the following proposed method, a share root CU/root block is defined. The top-left position of a root block is sharedRootPos, width is sharedRootWidth, and height is sharedRootHeight. The derivation of root block is as below.

In one embodiment, during the partitioning, if the current block can satisfy one or more predefined conditions, and the root block has not been set, then the position if the root block is set to be the top-left position of the current block, and the width and height of the root block is equal to the width and height of the current block, otherwise, the root block is not set.

In one embodiment, during the partitioning, if one of the children blocks can satisfy one or more predefine conditions, and the root block has not been set, then the top-left position of the root block is set to be the top-left position of the current block, and the width and height of the root block is equal to the width and height of the current block; otherwise, the root block is not set.

The predefined condition mentioned above can be related to the size (or area) of the current block. In one embodiment, the predefined condition corresponds to whether the size is less than or equal to (or less than) a predefined threshold TH. The threshold can be 4, 8, 16, 32, 64, 128, 256, 512, 1024, 2048, and 4096.

If the root block exists and the Intra mode is used within the root block, the reference samples are shared in the Intra prediction mode, the reference samples for the normal Intra mode, LM mode, and/or CIIP mode are derived according to the current block and root block; otherwise, the reference samples are derived in original way.

In one embodiment, the root block should not exceed the frame boundary.

In one embodiment, the position of shared root block will be used for the MPM derivation as well.

In one embodiment, the shared root block is available for both the luma and chroma components.

In one embodiment, the shared root block is only available for the luma component.

In one embodiment, the shared root block is only available for the chroma component.

In one embodiment, for one tile/slice/picture/tile group/video sequence, there exists one flag to indicate whether the current tile/slice/picture/tile group/video sequence needs to determine the root block. In one embodiment, in sequences with resolution less than 1080P, this high level flag is set to be false.

When Intra Block Copy (IBC) mode is enabled:
a. In one embodiment, in both the shared tree and separate trees, the reference block derived from the Block Vector (BV) of the IBC block cannot overlap with the root block;
b. In another embodiment, only in the shared tree, the reference block derived from the Block Vector (BV) of the IBC block cannot overlap with the root block; and
c. In another embodiment, only in the separate tree, the reference block derived from the Block Vector (BV) of the IBC block cannot overlap with the root block.

If the derived chroma BV (or both the chroma and luma BV) will make the reference chroma block (or both the chroma and luma block) overlap with the corresponding chroma root block (or both the chroma and luma root block):

In one embodiment, in the dual tree, the chroma block (or both the chroma and luma block) cannot use IBC mode.

In another embodiment, in the dual tree or shared tree or both, the derived chroma BV (or both the chroma and luma BV) will be extended in horizontal/vertical direction or both horizontal and vertical directions to cause the reference chroma block not to overlap with the corresponding chroma root block (or both the chroma and luma root block).

In one embodiment, the extended direction depends on the width and height of the overlapped region, if the width is larger than or equal to the height, then the BV will be extended in the vertical direction; otherwise, the BV will be extended in the horizontal direction.

In another embodiment, in the dual tree or shared tree or both, the samples of the reference chroma block (or both the chroma and luma block) that overlaps with the corresponding chroma root block (or both the chroma and luma root block) will be replaced by padded samples.

In another embodiment, the IBC Merge candidate can only be used if the position is outside the root block.

In another embodiment, the IBC merge candidate derivation will use the boundary of the root block when locating the neighbouring blocks.

If the separate-tree partitioning (also called dual-tree) is applied in I-slice, the luma and chroma components can use different tree partitions. For chroma tree partitioning, the smallest CU size can be 2x2, which is too small and will degrade the throughput.

In one embodiment, the smallest chroma CU size is constrained by size/area, width/height, or depth. For example, the smallest chroma CU size can be set equal to 16 (in chroma sample resolution). In another example, the smallest chroma CU width or height can be set equal to 4.

The size constraint can be an encoder only change or a normative change.

In another embodiment, the root CU concept can be applied to luma tree only, chroma tree only, or both luma tree and chroma tree. For example, the root CU is applied to chroma tree only. The threshold of the root chroma CU size is 64, 32, or 16. For this root chroma CU, the further CU split is enabled. However, for the children CUs within this root CU, the reference samples are shared for Intra prediction and/or LM.

If the partition tree is shared (e.g., share-tree partitioning in Inter-slice or I-slice with share-tree partitioning), different methods are proposed to avoid small chroma Intra blocks or to reduce data dependency between successive chroma Intra blocks.

### Method 1: Mode constraints within a root block

In another embodiment, a root block is determined, and all of the blocks within this root block must have the same prediction mode.

In one embodiment, the same mode means all of the blocks within the root block must be Intra/IBC prediction mode, or Inter prediction mode.

The luma component can be further partitioned into smaller blocks, and the partition of chroma components follows luma blocks. For Intra prediction blocks within the root block, the chroma blocks will use the top and left boundaries of the root block to generate Intra predictor, which results in less data dependency between successive chroma blocks. In one embodiment, for this chroma CU, all children CUs can use one TU.

When Intra Block Copy (IBC) mode is enabled:
- If the derived chroma BV will make the reference chroma block overlap with the corresponding chroma root block:
   i. In one embodiment, in dual tree, the chroma block cannot use IBC mode.
   ii. In another embodiment, in the dual tree, shared tree or both, the derived chroma BV will be extended in the horizontal/vertical direction or both the horizontal and vertical directions to cause the reference chroma block not to overlap with the corresponding chroma root block.
   iii. In another embodiment, in the dual tree, shared tree or both, the samples of the reference chroma block that overlap with the corresponding chroma root block will be replaced by padded samples.

For the root CU whose children CUs must have the same prediction mode, the prediction modes of each CU are constrained to be the same in one embodiment. For example, the prediction mode syntaxes of each CU are still signalled. However, they shall be the same. In one embodiment, it is a bitstream conformance that the prediction modes within the root CU shall be the same. In another embodiment, the prediction mode of the first CU in the root block is signalled. For the rest CUs in the root block, the prediction mode is not signalled. In one example, only the Inter mode CUs need to signal the skip flag and related syntaxes. If the CU is already inferred as Intra CU, the skip flag is inferred as false.

### Method 2: Disallowing chroma split in a root block

In a case that a root block is determined, the luma component of this root block can be further partitioned into smaller blocks, but the chroma components of this root block cannot be further partitioned, this results in multiple luma blocks correspond to one chroma block. The blocks within this root block do not have to have same prediction mode.

In one embodiment, the prediction mode of the non-split chroma CU can be signalled.

In another embodiment, the prediction mode of the non-split chroma CU can be inferred.

If the prediction mode of the chroma blocks within this root CU is inferred, a reference luma block is determined. The reference luma block can be the first luma block in the root block, the last luma block in the root block, the luma block covering the center position (e.g. the bottom-right-center, e.g. the BR-C block in Fig. 6) of the root block, the luma block with the largest area in the root block, the luma block covering one of the four corner of the root block, the first Intra coded luma block in the root block, or the first Inter coded luma block in the root block. If IBC is enabled, the reference block can be the first IBC coded luma block, the last IBC coded luma block, or the luma block with the pre-defined position (e.g. center position) in the root block.

In one embodiment, if the reference luma block is Intra prediction, the Intra prediction mode of the chroma block will be derived according to the reference luma block.

In another embodiment, if the reference luma block is Intra prediction, the Intra prediction mode of the chroma block will be a predefined mode, e.g. DC or planar.

In one embodiment, if the reference luma block is Intra prediction, the chroma block is treated as non-ISP (Intra Sub-partition Prediction) mode.

In another embodiment, for the chroma block, its prediction mode can be explicitly signalled and can be different from the luma block.

In one embodiment, if the reference luma block is Inter prediction, the MV of the chroma block is derived from the luma block's MV.

In one embodiment, the non-split chroma CU inferred as Inter prediction mode cannot be merge mode.

In one embodiment, the non-split chroma CU inferred as Inter prediction mode cannot be sub-block transform (SBT) mode.

In one embodiment, the non-split chroma CU inferred as Inter prediction mode cannot apply decoder-side motion vector refinement (DMVR), and the reference MV is the MV before / after refinement.

In one embodiment, the non-split chroma CU inferred as Inter prediction mode cannot be triangular mode.

In another example, the weighted averaged luma MV of the corresponding luma CUs can be used for this chroma CU. The weight can be the same for all CUs or depends on the CU area. In one example, if the corresponding luma CU uses the sub-block mode (e.g. ATMVP mode or affine mode or MV planar mode), the chroma CU also use the same mode but with larger CU size. In another example, the chroma MV is explicitly signalled.

When the luma blocks within the root block have Inter and Intra prediction mode, some constraints can be applied to derive the chroma Intra prediction mode.

In one embodiment, the chroma component can be Combined Intra Inter Prediction (CIIP) mode.

In one embodiment, the reference block can only be Inter mode. The Inter prediction mode information can be inherited from the first luma Inter block, the last Inter luma block, or the luma Inter block with the largest area.

In one embodiment, if the reference luma block is Intra prediction mode, the Linear Model (LM) mode is not allowed.

In another embodiment, the prediction mode for the non-split chroma CU can be conditionally inferred. If the reference luma block is Inter prediction mode, the chroma CU is inferred as Inter prediction mode, and the motion information is inherited from the reference luma block. If the reference luma block is not Inter mode, then the prediction mode of the non-split chroma CU will be signalled.

When Intra Block Copy (IBC) mode is enabled, only the IBC block with BV that will not make the reference chroma block overlap with the corresponding chroma root block can be chosen. In another embodiment, only the IBC block with BV that will not make the reference luma and chroma block overlap with the corresponding luma and chroma root block can be chosen.

In another embodiment, if the selected reference luma block is IBC mode, then the derived luma reference block cannot overlap with the root block.

In another embodiment, if the selected reference luma block is IBC mode, and if the derived luma reference block overlaps with the root block, the luma BV will be extended.

In another embodiment, if the selected reference luma block is IBC mode, and if the derived luma reference block overlaps with the root block, only the derived chroma BV will be extended.

### Method 3: Mode constraints and conditionally disallow chroma split within a root block

In another embodiment, a root block is determined; the luma component of this root block can be further partitioned into smaller blocks; and whether the chroma components of the root block can be further split is decided by the prediction mode of the luma blocks within the same root block and the corresponding chroma block sizes.

In one embodiment, if all of the blocks within the current root block are Inter prediction mode, then the partition of chroma components follows the luma blocks. If all of the blocks within current root block are Intra/IBC mode, then the chroma components of this root block cannot be further split, which results in multiple luma blocks corresponding to one chroma block. Also, since Inter mode is not supported in the 4x4 luma partition, when a partition node has one or more children nodes that luma block size equal to 4x4, the node is inferred as non-Inter mode (Intra or IBC mode).

In one embodiment, a flag mode_constraint_flag is signalled to indicate the prediction mode of the root block. All blocks within the root block should either be Inter prediction mode or intra/IBC prediction mode. For example, when mode_constraint_flag is equal to 1, all blocks within the root block are Inter coded blocks, otherwise, all blocks within the root block are Intra/IBC coded blocks.

Whether to decode the mode_constraint_flag depends on a variable modeTypeCondition. The variable modeTypeCondition is derived as follows:
- If one of the following conditions is true, modeTypeCondition is set equal to 0
   - slice_type = = I and qtbtt_dual_tree_intra flag is equal to 1
   - modeTypeCurr is not equal to MODE_TYPE_ALL
- Otherwise, if one of the following conditions is true, modeTypeCondition is set equal to 1
   - cbWidth ^{∗} cbHeight is equal to THRES and split_qt_flag is equal to 1
   - cbWidth ^{∗} cbHeight is equal to THRES and MttSplitMode[ x0 ][ y0 ][ mttDepth ] is equal to SPLIT_TT_HOR or SPLIT_TT_VER
   - cbWidth ^{∗} cbHeight is equal to (THRES>>1) and MttSplitMode[ x0 ][ y0 ][ mttDepth ] is equal to SPLIT_BT_HOR or SPLIT_BT_VER
- Otherwise, if one of the following conditions is true, modeTypeCondition is set equal to 1 + (slice_type != I ? 1 : 0)
   - cbWidth ^{∗} cbHeight is equal to THRES and MttSplitMode[ x0 ][ y0 ][ mttDepth ] is equal to SPLIT BTHOR or SPLIT BT VER
   - cbWidth ^{∗} cbHeight is equal to (THRES<<1) and MttSplitMode[ x0 ][ y0 ][ mttDepth ] is equal to SPLIT_TT_HOR or SPLIT_TT_VER
- Otherwise, modeTypeCondition is set equal to 0.

In the above derivations, MttSplitMode[ x0 ][ y0 ][ mttDepth ] represents horizontal and vertical binary and ternary splittings of a coding unit within the multi-type tree (MTT). The variable THRES is derived as follows:
If the colour format is 4:4:4, THRES is set equal to 16,
Otherwise, if the colour format is 4:2:2, THRES is set equal to 32,
Otherwise, if the colour format is 4:2:0, THRES is set equal to 64.

In another embodiment, the variable THRES is derived as follows:
If the colour format is 4:4:4, THRES is set equal to 8/16/32/64,
Otherwise, if the colour format is 4:2:2, THRES is set equal to 16/32/64/128,
Otherwise, if the colour format is 4:2:0, THRES is set equal to 32/64/128/256.

In another embodiment, the chroma format is used as one of the conditions for determining the modeTypeCondition. The modeTypeCondition derivation for 422 chroma format and 420 chroma format is different. The modeTypeCondition is always set to 0 when the chroma format is equal to 444 chroma format. The modeTypeCondition is derived as follow:
- If the chroma_format_idc is equal to 1 (when the 4:2:0 chroma format is used), the variable modeTypeCondition is derived as follows:
   - If one of the following conditions is true, modeTypeCondition is set equal to 0
      - slice_type = = I and qtbtt_dual_tree_intra flag is equal to 1
      - modeTypeCurr is not equal to MODE_TYPE_ALL
   - Otherwise, if one of the following conditions is true, modeTypeCondition is set equal to 1
      - cbWidth ^{∗} cbHeight is equal to 64 and split_qt_flag is equal to 1
      - cbWidth ^{∗} cbHeight is equal to 64 and MttSplitMode[ x0 ][ y0 ][ mttDepth ] is equal to SPLIT_TT_HOR or SPLIT_TT_VER
      - cbWidth ^{∗} cbHeight is equal to 32 and MttSplitMode[ x0 ][ y0 ][ mttDepth ] is equal to SPLIT_BT_HOR or SPL1T_BT_VER (in another embodiment, this condition can be removed)
   - Otherwise, if one of the following conditions is true, modeTypeCondition is set equal to 1 + (slice_type != I ? 1 : 0)
      - cbWidth ^{∗} cbHeight is equal to 64 and MttSplitMode[ x0 ][ y0 ][ mttDepth ] is equal to SPLIT BTHOR or SPLIT BT VER
      - cbWidth ^{∗} cbHeight is equal to 128 and MttSplitMode[ x0 ][ y0 ][ mttDepth ] is equal to SPLIT_TT_HOR or SPLIT_TT_VER.

In another embodiment, the following 2 conditions are added:
- cbWidth is equal to 8 and MttSplitMode[ x0 ][ y0 ][ mttDepth ] is equal to SPLIT_BT_VER
- cbWidth is equal to 16 and split_qt_flag is equal to 0 and
   MttSplitMode[ x0 ][ y0 ][ mttDepth ] is equal to SPLIT_TT_VER.

In another embodiment, the following 4 conditions are added:
- cbWidth is equal to 8 and cbHeight is equal to 16 and
   MttSplitMode[ x0 ][ y0 ][ mttDepth ] is equal to SPLIT_BT_VER
- cbWidth is equal to 16 and cbHeight is equal to 16 and
   MttSplitMode[ x0 ][ y0 ][ mttDepth ] is equal to SPLIT_TT_VER
- cbWidth is equal to 4 and cbHeight is equal to 32 and
   MttSplitMode[ x0 ][ y0 ][ mttDepth ] is equal to SPLIT_BT_HOR or SPLIT_TT_HOR
- cbWidth is equal to 4 and cbHeight is equal to 64 and
   MttSplitMode[ x0 ][ y0 ][ mttDepth ] is equal to SPLIT_TT_HOR

- Otherwise, modeTypeCondition is set equal to 0
- Otherwise, if the chroma_format_idc is equal to 2 (when the 4:2:2 chroma format is used), the variable modeTypeCondition is derived as follows:
   - If one of the following conditions is true, modeTypeCondition is set equal to 0
      - slice_type = = I and qtbtt_dual_tree_intra flag is equal to 1
      - modeTypeCurr is not equal to MODE_TYPE_ALL

   - Otherwise, if one of the following conditions is true, modeTypeCondition is set equal to 1
      - cbWidth ^{∗} cbHeight is equal to 64 and split_qt_flag is equal to 1
      - cbWidth ^{∗} cbHeight is equal to 64 and MttSplitMode[ x0 ][ y0 ][ mttDepth ] is equal to SPLIT_TT_HOR or SPLIT_TT_VER
      - cbWidth ^{∗} cbHeight is equal to 32 and MttSplitMode[ x0 ][ y0 ][ mttDepth ] is equal to SPLIT BTHOR or SPLIT BT VER.

In one embodiment, modeTypeCondition setting is shown as follows:
- otherwise, if one of the following conditions is true, modeTypeCondition is set equal to 1 + (slice_type != I ? 1 : 0)
   - cbWidth is equal to 8 and MttSplitMode[ x0 ][ y0 ][ mttDepth ] is equal to
      SPLIT_BT_VER
   - cbWidth is equal to 16 and split_qt_flag is equal to 0 and
      MttSplitMode[ x0 ][ y0 ][ mttDepth ] is equal to SPLIT_TT_VER.

**In** another embodiment, modeTypeCondition setting is shown as follows:
- otherwise, if one of the following conditions is true, modeTypeCondition is set equal to 1 + (slice_type != I ? 1 : 0)
   - cbWidth is equal to 8 and cbHeight is equal to 8 and MttSplitMode[ x0 ][ y0 ][ mttDepth ] is equal to SPLIT_BT_VER
   - cbWidth is equal to 16 and cbHeight is equal to 8 and MttSplitMode[ x0 ][ y0 ][ mttDepth ] is equal to SPLIT_TT_VER
   - cbWidth is equal to 4 and cbHeight is equal to 16 and MttSplitMode[ x0 ][ y0 ][ mttDepth ] is equal to SPLIT_BT_HOR or SPLIT_TT_HOR
   - cbWidth is equal to 4 and cbHeight is equal to 32 and MttSplitMode[ x0 ][ y0 ][ mttDepth ] is equal to SPLIT_TT_HOR
   - Otherwise, modeTypeCondition is set equal to 0
- Otherwise, if the chroma_format_idc is equal to 3 (when the 4:4:4 chroma format is used), the variable modeTypeCondition is set equal 0.
- Otherwise, (the chroma_format_idc is equal to 0, when the monochrome is used), the variable modeTypeCondition is set equal 0.

In another embodiment, the chroma format is used as one of the conditions for determining the modeTypeCondition. The modeTypeCondition derivation for 422 chroma format and 420 chroma format are different. The modeTypeCondition is always set to 0 when the chroma format is equal to 444 chroma format. The modeTypeCondition is derived as follow:
- If one of the following conditions is true, modeTypeCondition is set equal to 0
   - slice_type = = I and qtbtt_dual_tree_intra flag is equal to 1
   - modeTypeCurr is not equal to MODE_TYPE_ALL
   - chroma_format_idc is equal to 0 or 3
- Otherwise, if one of the following conditions is true, modeTypeCondition is set equal to 1
   - cbWidth ^{∗} cbHeight is equal to 64 and split_qt_flag is equal to 1
   - cbWidth ^{∗} cbHeight is equal to 64 and MttSplitMode[ x0 ][ y0 ][ mttDepth ] is equal to SPLIT_TT_HOR or SPLIT_TT_VER
   - cbWidth ^{∗} cbHeight is equal to 32 and MttSplitMode[ x0 ][ y0 ][ mttDepth ] is equal to SPLIT_BT_HOR or SPLIT_BT_VER
- Otherwise, one of the following conditions is true, modeTypeCondition is set equal to 1 + (slice_type != I ? 1 : 0)
   - if chroma_format_idc is equal to 1 and cbWidth ^{∗} cbHeight is equal to 64 and MttSplitMode[ x0 ][ y0 ][ mttDepth ] is equal to SPLIT_BHOR or SPLIT_BT_VER
   - if chroma_format_idc is equal to 1 and cbWidth ^{∗} cbHeight is equal to 128 and MttSplitMode[ x0 ][ y0 ][ mttDepth ] is equal to SPLIT_TT_HOR or SPLIT_TT_VER.

In one embodiment, the following 2 conditions are added:
- cbWidth is equal to 8 and MttSplitMode[ x0 ][ y0 ][ mttDepth ] is equal to SPLIT_BT_VER
- cbWidth is equal to 16 and split_qt_flag is equal to 0 and MttSplitMode[ x0 ][ y0 ][ mttDepth ] is equal to SPLIT_TT_VER.

In another embodiment, the following 8 conditions are added:
- if chroma_format_idc is equal to 1 and cbWidth is equal to 8 and cbHeight is equal to 16 and MttSplitMode[ x0 ][ y0 ][ mttDepth ] is equal to SPLIT_BT_VER
- if chroma_format_idc is equal to 1 and cbWidth is equal to 16 and cbHeight is equal to 16 and MttSplitMode[ x0 ][ y0 ][ mttDepth ] is equal to SPLIT_TT_VER
- if chroma_format_idc is equal to 1 and cbWidth is equal to 4 and cbHeight is equal to 32 and MttSplitMode[ x0 ][ y0][ mttDepth ] is equal to SPLIT_BT_HOR or SPLIT_TT_HOR
- if chroma_format_idc is equal to 1 and cbWidth is equal to 4 and cbHeight is equal to 64 and MttSplitMode[ x0 ][ y0 ][ mttDepth ] is equal to SPLIT_TT_HOR
- if chroma_format_idc is equal to 2 and cbWidth is equal to 8 and cbHeight is equal to 8 and MttSplitMode[ x0 ][ y0 ][ mttDepth ] is equal to SPLIT_BT_VER
- if chroma_format_idc is equal to 2 and cbWidth is equal to 16 and cbHeight is equal to 8 and MttSplitMode[ x0 ][ y0 ][ mttDepth ] is equal to SPLIT_TT_VER
- if chroma_format_idc is equal to 2 and cbWidth is equal to 4 and cbHeight is equal to 16 and MttSplitMode[ x0 ][ y0 ][ mttDepth ] is equal to SPLIT_BT_HOR or SPLIT_TT_HOR
- if chroma_format_idc is equal to 2 and cbWidth is equal to 4 and cbHeight is equal to 32 and MttSplitMode[ x0 ][ y0 ][ mttDepth ] is equal to SPLIT_TT_HOR
   - Otherwise, modeTypeCondition is set equal to 0.

In this embodiment, the modeTypeCondition can be set as 2 only when the 4:2:0 chroma format is used. Therefore, the mode_constraint_flag is only signalled/parsed when the 4:2:0 chroma format is used. When the chroma format is not 4:2:0, the mode_constraint_flag is not signalled. Also, the modeTypeCondition can be set as 1 only when the 4:2:0 or 4:2:2 chroma format is used. Therefore, the root block type is inferred as MODE_TYPE_INTRA when the 4:2:0 or 4:2:2 chroma format is used. For 4:2:2 chroma format, the modeTypeCondition can only be 0 or 1. For 4:4:4 chroma format, the modeTypeCondition can only be 0. For 4:2:0 chroma format, the modeTypeCondition can only be 0 or 1 or 2.

In another embodiment, the constraint is not defined by the CB size (e.g. cbWidth ^{∗} cbHeight). Instead, it is defined by considering cbWidth, cbHeight, SubWidthC, SubHeightC, wherein the SubWidthC, SubHeightC are defined by the chroma format. The modeTypeCondition can be derived as follow. Whether to decode the mode_constraint_flag depends on a variable modeTypeCondition. The variable modeTypeCondition is derived as follows:
- If one of the following conditions is true, modeTypeCondition is set equal to 0
   - slice_type = = I and qtbtt_dual_tree_intra flag is equal to 1
   - modeTypeCurr is not equal to MODE_TYPE_ALL
- Otherwise, if one of the following conditions is true, modeTypeCondition is set equal to 1
   - cbWidth ^{∗} cbHeight is equal to 64 and split_qt_flag is equal to 1
   - cbWidth ^{∗} cbHeight is equal to 64 and MttSplitMode[ x0 ][ y0 ][ mttDepth ] is equal to SPLIT_TT_HOR or SPLIT_TT_VER
   - cbWidth ^{∗} cbHeight is equal to 32 and MttSplitMode[ x0 ][ y0 ][ mttDepth ] is equal to SPLIT BTHOR or SPLIT BT VER
- Otherwise, if one of the following conditions is true, modeTypeCondition is set equal to 1 + (slice_type != I ? 1 : 0)
   - (cbWidth/SubWidthC) ^{∗} (cbHeight/SubHeightC) is equal to 16 and MttSplitMode[ x0 ][ y0 ][ mttDepth ] is equal to SPLIT_BT_HOR or SPLIT_BT_VER
   - (cbWidth/SubWidthC) ^{∗} (cbHeight/SubHeightC) is equal to 32 and MttSplitMode[ x0 ][ y0 ][ mttDepth ] is equal to SPLIT_TT_HOR or SPLIT_TT_VER.

In the above, modeTypeCurr represent the modeType of the current block. The variable modeType specifying whether Intra (i.e., MODE INTRA), IBC (i.e., MODE IBC), palette (i.e., MODE_PLT), and Inter coding modes can be used (i.e., MODE_TYPE_ALL), or whether only Intra, IBC, and palette coding modes can be used (i.e., MODE TYPE INTRA), or whether only Inter coding modes can be used (i.e., MODE_TYPE_INTER) for coding units inside the coding tree node.

In one embodiment, the following 2 conditions are added:
- (cbWidth/SubWidthC) is equal to 4 and MttSplitMode[ x0 ][ y0 ][ mttDepth ] is equal to SPLIT_BT_VER
- (cbWidth/SubWidthC) is equal to 8 and split_qt_flag is equal to 0 and MttSplitMode[ x0 ][ y0 ][ mttDepth ] is equal to SPLIT_TT_VER.

In another embodiment, the following 4 conditions are added:
- (cbWidth/SubWidthC) is equal to 4 and (cbHeight/SubHeightC) is equal to 8 and MttSplitMode[ x0 ][ y0 ][ mttDepth ] is equal to SPLIT_BT_VER
- (cbWidth/SubWidthC) is equal to 8 and (cbHeight/SubHeightC) is equal to 8 and MttSplitMode[ x0 ][ y0 ][ mttDepth ] is equal to SPLIT_TT_VER
- (cbWidth/SubWidthC) is equal to 2 and (cbHeight/SubHeightC) is equal to 16 and MttSplitMode[ x0 ][ y0 ][ mttDepth ] is equal to SPLIT_BT_HOR or SPLIT_TT_HOR
- (cbWidth/SubWidthC) is equal to 2 and (cbHeight/SubHeightC) is equal to 32 and MttSplitMode[ x0 ][ y0 ][ mttDepth ] is equal to SPLIT_TT_HOR

- Otherwise, modeTypeCondition is set equal to 0.

In another embodiment, the constraint is not defined by the cb size (e.g. cbWidth ^{∗} cbHeight). It is defined by considering chroma format, cbWidth, cbHeight, SubWidthC, SubHeightC, where the SubWidthC, SubHeightC are defined by the chroma format. The modeTypeCondition can be derived as follow. The variable modeTypeCondition is derived as follows:
- If one of the following conditions is true, modeTypeCondition is set equal to 0
   - slice_type = = I and qtbtt_dual_tree_intra flag is equal to 1
   - modeTypeCurr is not equal to MODE_TYPE_ALL
   - chroma_format_idc == 0
   - chroma_format_idc == 3
- Otherwise, if one of the following conditions is true, modeTypeCondition is set equal to 1
   - (cbWidth / SubWidthC) ^{∗} (cbHeight / SubHeightC) is equal to 16 and split_qt_flag is equal to 1
   - (cbWidth / SubWidthC) ^{∗} (cbHeight / SubHeightC) is equal to 16 and MttSplitMode[ x0 ][ y0 ][ mttDepth ] is equal to SPLIT_TT_HOR or SPLIT_TT_VER
   - (cbWidth / SubWidthC) ^{∗} (cbHeight / SubHeightC) is equal to 8 and MttSplitMode[ x0 ][ y0 ][ mttDepth ] is equal to SPLIT_BT_HOR or SPLIT_BT_VER
- Otherwise, if one of the following conditions is true, modeTypeCondition is set equal to 1 + (slice_type != I ? 1 : 0)
   - (cbWidth / SubWidthC) ^{∗} (cbHeight / SubHeightC) is equal to 16 and MttSplitMode[ x0 ][ y0 ][ mttDepth ] is equal to SPLIT_BT_HOR or SPLIT_BT_VER
   - (cbWidth / SubWidthC) ^{∗} (cbHeight / SubHeightC) is equal to 32 and MttSplitMode[ x0 ][ y0 ][ mttDepth ] is equal to SPLIT_TT_HOR or SPLIT_TT_VER.

In one embodiment, the following 2 conditions are added:
- (cbWidth/SubWidthC) is equal to 4 and MttSplitMode[ x0 ][ y0 ][ mttDepth ] is equal to SPLIT_BT_VER
- (cbWidth/SubWidthC) is equal to 8 and split_qt_flag is equal to 0 and MttSplitMode[ x0 ][ y0 ][ mttDepth ] is equal to SPLIT_TT_VER.

In another embodiment, the following 4 conditions are added:
- (cbWidth/SubWidthC) is equal to 4 and (cbHeight/SubHeightC) is equal to 8 and MttSplitMode[ x0 ][ y0 ][ mttDepth ] is equal to SPLIT_BT_VER
- (cbWidth/SubWidthC) is equal to 8 and (cbHeight/SubHeightC) is equal to 8 and MttSplitMode[ x0 ][ y0 ][ mttDepth ] is equal to SPLIT_TT_VER
- (cbWidth/SubWidthC) is equal to 2 and (cbHeight/SubHeightC) is equal to 16 and MttSplitMode[ x0 ][ y0 ][ mttDepth ] is equal to SPLIT_BT_HOR or SPLIT_TT_HOR
- (cbWidth/SubWidthC) is equal to 2 and (cbHeight/SubHeightC) is equal to 32 and MttSplitMode[ x0 ][ y0 ][ mttDepth ] is equal to SPLIT_TT_HOR

- Otherwise, modeTypeCondition is set equal to 0.

In another embodiment, the constraint is not defined by the cb size (e.g. cbWidth ^{∗} cbHeight). Instead, it is defined by considering chroma_format_idc, cbWidth, cbHeight, SubWidthC, SubHeightC, where the SubWidthC, SubHeightC are defined by the chroma format. The modeTypeCondition can be derived as follow. The variable modeTypeCondition is derived as follows:
- If one of the following conditions is true, modeTypeCondition is set equal to 0
   - slice_type = = I and qtbtt_dual_tree_intra flag is equal to 1
   - modeTypeCurr is not equal to MODE_TYPE_ALL
   - chroma_format_idc == 0
   - chroma_format_idc == 3
- Otherwise, if one of the following conditions is true, modeTypeCondition is set equal to 1derived as follows:

A variable minLuma is set equal to :
- (cbWidth^{∗}cbHeight) >> 2 if MttSplitMode[ x0 ][ y0 ][ mttDepth ] is equal to SPLIT_TT_HOR or SPLIT_TT_VER or split_qt_flag is equal to 1
- (cbWidth^{∗}cbHeight) >> 1 if MttSplitMode[ x0 ][ y0 ][ mttDepth ] is equal to SPLIT BTHOR or SPLIT BT VER
- cbWidth ^{∗} cbHeight, otherwise.

A variable minChroma is set equal to minLuma / (SubWidthC ^{∗} SubHeightC). In one embodiment,
- modeTypeCondition is set equal to 0 if minChroma is higher than 8.
- Otherwise, modeTypeCondition is set equal to 1 + (slice_type == I || minLuma == 16?) 0 :1

In another embodiment, a variable minLumaWidth is set equal to :
- cbWidth >> 2 if MttSplitMode[ x0 ][ y0 ][ mttDepth ] is equal to SPLIT_TT_VER
- cbWidth >> 1 if MttSplitMode[ x0 ][ y0 ][ mttDepth ] is equal to SPLIT_BT_VER or split_qt_flag is equal to 1
- cbWidth, otherwise.

A variable minChromaWidth is set equal to minLumaWidth / SubWidthC.

A variable minLumaHeight is set equal to :
- cbHeight >> 2 if MttSplitMode[ x0 ][ y0 ][ mttDepth ] is equal to SPLIT_TT_HOR
- cbHeight >> 1 if MttSplitMode[ x0 ][ y0 ][ mttDepth ] is equal to SPLIT_BT_HOR or split_qt_flag is equal to 1
- cbHeight, otherwise.

A variable minChromaHeight is set equal to minLumaHeight / SubHeightC.
- modeTypeCondition is set equal to 0 if minChroma is higher than 8 and minChromaWidth is larger than 2 and minChromaHeight is larger than 8.
- Otherwise, modeTypeCondition is set equal to 1 + (slice_type == I || minLuma == 16?) 0 :1.

In another embodiment, a variable minLumaWidth is set equal to :
- cbWidth >> 2 if MttSplitMode[ x0 ][ y0 ][ mttDepth ] is equal to SPLIT_TT_VER and split_qt_flag is equal to 0
- cbWidth >> 1 if MttSplitMode[ x0 ][ y0 ][ mttDepth ] is equal to SPLIT_BT_VER or split_qt_flag is equal to 1
- cbWidth, otherwise.

A variable minChromaWidth is set equal to minLumaWidth / SubWidthC.
- modeTypeCondition is set equal to 0 if minChroma is higher than 8 and minChromaWidth is larger than 2.
- Otherwise, modeTypeCondition is set equal to 1 + (slice_type == I || minLuma == 16?) 0 :1.

In another embodiment, the constraint is not defined by the cb size (e.g. cbWidth ^{∗} cbHeight). It is defined by considering cbWidth, cbHeight, SubWidthC, SubHeightC, where the SubWidthC, SubHeightC are defined by the chroma format. The modeTypeCondition can be derived as follow. The variable modeTypeCondition is derived as follows:
- If one of the following conditions is true, modeTypeCondition is set equal to 0
   - slice_type = = I and qtbtt_dual_tree_intra flag is equal to 1
   - modeTypeCurr is not equal to MODE_TYPE_ALL
- Otherwise, if one of the following conditions is true, modeTypeCondition is set equal to 1
   - cbWidth ^{∗} cbHeight is equal to 64, cbWidth ^{∗} cbHeight is smaller than 64 ^{∗} SubWidthC ^{∗} SubHeightC, and split_qt_flag is equal to 1
   - cbWidth ^{∗} cbHeight is equal to 64, cbWidth ^{∗} cbHeight is smaller than 64 ^{∗} SubWidthC ^{∗} SubHeightC, and MttSplitMode[ x0 ][ y0 ][ mttDepth ] is equal to SPLIT_TT_HOR or SPLIT_TT_VER
   - cbWidth ^{∗} cbHeight is equal to 32, cbWidth ^{∗} cbHeight is smaller than 32 ^{∗} SubWidthC ^{∗} SubHeightC, and MttSplitMode[ x0 ][ y0 ][ mttDepth ] is equal to SPLIT_BT_HOR or SPL1T_BT_VER
- Otherwise, if one of the following conditions is true, modeTypeCondition is set equal to 1 + (slice_type != I ? 1 : 0)
   - cbWidth ^{∗} cbHeight is smaller than 32 ^{∗} SubWidthC ^{∗} SubHeightC and MttSplitMode[ x0 ][ y0 ][ mttDepth ] is equal to SPLIT_BT_HOR or SPLIT_BT_VER
   - cbWidth ^{∗} cbHeight is smaller than 64 ^{∗} SubWidthC ^{∗} SubHeightC and MttSplitMode[ x0 ][ y0 ][ mttDepth ] is equal to SPLIT_TT_HOR or SPLIT_TT_VER.

In one embodiment, the following 2 conditions are added:
- cbWidth is equal to 4 ^{∗} SubWidthC and MttSplitMode[ x0 ][ y0 ][ mttDepth ] is equal to SPLIT_BT_VER
- cbWidth is equal to 8 ^{∗} SubWidthC and split_qt_flag is equal to 0 and MttSplitMode[ x0 ][ y0 ][ mttDepth ] is equal to SPLIT_TT_VER.

In another embodiment, the following 4 conditions are added:
- cbWidth is equal to 4^{∗} SubWidthC and cbHeight is equal to 8 ^{∗} SubHeightC and MttSplitMode[ x0 ][ y0 ][ mttDepth ] is equal to SPLIT_BT_VER
- cbWidth is equal to 8^{∗} SubWidthC and cbHeight is equal to 8 ^{∗} SubHeightC and MttSplitMode[ x0 ][ y0 ][ mttDepth ] is equal to SPLIT_TT_VER
- cbWidth is equal to 2^{∗} SubWidthC and cbHeight is equal to 16 ^{∗} SubHeightC and MttSplitMode[ x0 ][ y0 ][ mttDepth ] is equal to SPLIT_BT_HOR or SPLIT_TT_HOR
- cbWidth is equal to 2^{∗} SubWidthC and cbHeight is equal to 32 ^{∗} SubHeightC and MttSplitMode[ x0 ][ y0 ][ mttDepth ] is equal to SPLIT_TT_HOR

- Otherwise, modeTypeCondition is set equal to 0.

In another embodiment, when the monochrome is used, the modeTypeCondition is always set equal to 0.

When modeTypeCondition is equal to 2, mode_constraint_flag will be decoded, and the modeType is set according to mode constraint flag. When modeTypeCondition is equal to 1, modeType is inferred to be MODE_TYPE_INTRA, all of the blocks within the root blocks are intra/IBC predicted. When modeTypeCondition is equal to 0, the modeType is not changed. The syntax table is as follows:

**Table 1. Exemplary Syntax Table**

| | |
|---|---|
| coding_tree( x0, y0, cbWidth, cbHeight, qgOn, cbSubdiv, cqtDepth, mttDepth, depthOffset, partIdx, treeTypeCurr, modeTypeCurr) { | **Descriptor** |
| if( ( allowSplitBtVer ∥ allowSplitBtHor \| \| allowSplitTtVer \| \| allowSplitTtHor \| \| allowSplitQT ) &&( x0 + cbWidth <= pic width in luma samples) && (y0 + cbHeight <= pic_height_in_luma_samples ) ) | |
| **split_cu_flag** | ae(v) |
| if( cu_qp_delta_enabled_flag && qgOn && cbSubdiv <= cu_qp_delta_subdiv ) { | |
| IsCuQpDeltaCoded = 0 | |
| CuQpDeltaVal = 0 | |
| CuQgTopLeftX = x0 | |
| CuQgTopLeftY = y0 | |
| } | |
| if( split cu flag ) { | |
| if( ( allowSplitBtVer ∥ allowSplitBtHor ∥ allowSplitTtVer ∥ allowSplitTtHor ) && allowSplitQT ) | |
| **split_qt_flag** | ae(v) |
| if( !split_qt_flag ) { | |
| if( ( allowSplitBtHor \| \| allowSplitTtHor ) && ( allowSplitBtVer ∥ allowSplitTtVer ) ) | |
| **mtt_split_cu_vertical_flag** | ae(v) |
| if( ( allowSplitBtVer && allowSplitTtVer && mtt_split_cu_vertical_flag ) ∥ (allowSplitBtHor && allowSplitTtHor && !mtt_split_cu_vertical_flag ) ) | |
| **mtt_split_cu_binary_flag** | ae(v) |
| } | |
| if( modeTypeCondition = = 2 ) { | |
| **mode_constraint_flag** | ae(v) |
| modeType = mode_constraint_flag ? MODE TYPE INTRA : MODE_TYPE_INTER | |
| } | |
| else | |
| modeType = (modeTypeCondition = = 1 ) ? MODE_TYPE_INTRA : modeTypeCurr | |
| treeType = ( modeType = = MODE_TYPE_INTRA ) ? DUAL_TREE_LUMA : treeTypeCurr | |
| if( !split_qt_flag ) { | |
| if( MttSplitMode [ x0 ][ y0 ][ mttDepth ] = = SPLIT_BT_VER ) { | |
| depthOffset += (x0 + cbWidth > pic width in luma samples) ? 1 : 0 | |
| x1 = x0 + (cbWidth/ 2) | |
| coding_tree( x0, y0, cbWidth / 2, cbHeight, qgOn, cbSubdiv + 1, cqtDepth, mttDepth + 1, depthOffset, 0, treeType , modeType ) | |
| if( x1 < pic width in luma samples ) | |
| coding_tree( x1, y0, cbWidth / 2, cbHeightY, qgOn, cbSubdiv + 1, cqtDepth, mttDepth + 1, depthOffset, 1, treeType , modeType ) | |
| } else if( MttSplitMode[ x0 ][ y0 ][ mttDepth ] = = SPLIT_BT_HOR) { | |
| ....... | |

In one embodiment, regardless of the colour format, if chroma CB size of one of the children blocks is less than 16 chroma samples, and the root block has not been set, then the top-left position of the root block is set to be the top-left position of the current block, and the width and height of the root block are equal to these of the current block, otherwise, the root block is not set. The threshold can be 4, 8, 16, 32, 64, 128, 256, 512, 1024, 2048, and 4096.

When the root block is determined as Inter mode, the 4x4 luma block partition is disallowed. Therefore, the block partition that results in one or more children sub-block with luma block size equal to 4x4 is disallowed. The syntax of that block partition flag is skipped and inferred as not split by the kind of block partition.

In one embodiment, when the modeTypeCurr is equal MODE_TYPE_INTER, the BT split is disallowed when the CU/CB area is equal to 32, and the TT split is disallowed when the CU/CB area is equal to 64. Where the modeTypeCurr is decided by the parent partition node and passed to the current node. Therefore, depending on the variable (modeTypeCurr) passed from the parent node, the BT split or TT split is disallowed when the CU/CB is equal to 32 or 64, respectively. To disallow a partition means the split syntax is not signalled and is inferred as 0. For example, the allowBtSplit or allowTtSplit is set equal to 0/False when modeTypeCurr is equal to MODE_TYPE_INTER and cbWidth ^{∗} cbHeight is equal to 32 or 64, respectively.

### Method 4: De-blocking modifications when disallowing chroma partition split

In Inter slice (or shared tree), if the root block containing luma component and chroma component with different partitioning, the deblocking process for luma and chroma will be separated. That is, the Boundary Strength (Bs) settings of luma blocks/CUs cannot be reused by chroma blocks/CUs. The Boundary Strength (Bs) settings of the chroma blocks/CUs will be separately set, and then apply the filtering for chroma components.

In one embodiment, if current CU is chroma CU, and neighbouring CU is luma CU, then the boundary strength (BS) value for chroma component will be set to 2.

In one embodiment, if current CU is chroma CU, and neighbouring CU is luma CU, then the boundary strength (BS) value for chroma component will be set to 1.

### Method 5: Reduced secondary transform (RST) modifications when disallowing chroma partition split

In Inter slice (or shared tree), if the root block containing luma component and chroma component with different partitioning, the decision of the RST for luma blocks and chroma block in the root region are different.

In one embodiment, RST is not applied to and signalled in the chroma block in the root block.

In another embodiment, RST is only applied and signalled for the chroma block in the root block if the block width and block height are all larger than 2 chroma samples.

The non-zero coefficient level setting in the root block is the same as the settings in a dual tree.

For example, for luma blocks in the root block, the threshold is changed to LFNST_SIG LUMA, and for chroma block in the root block, the threshold is changed to LFNST_SIG_CHROMA, where LFNST_SIG_LUMA and LFNST_SIG_CHROMA are the threshold for luma and chroma components, respectively.

The context variables derivation in the root block is also the same as the settings in a dual tree.

For example, if in single tree, the mts index is less than 2, and the current block is in the root block, then the context variable will be incremented by 1; otherwise (in single tree, the mts index is less than 2, but is not in the root block), the context variables will not be incremented by 1.

### Method 6: Intra subpartition prediction (ISP) modifications when disallowing chroma partition split

For luma blocks in the root block, there will be no chroma subpartition.

### Method 7: Delta QP (DQP) modifications when disallowing chroma partition split

In single tree, the cu level delta QP will not be signalled in the chroma block in the root block.

### Method 8: Prediction mode signalling when disallowing chroma partition split

The prediction mode signalling in the root block can be inferred.
- When IBC is not enabled:

For luma blocks in the root block:
- In one embodiment, if the luma block's top-left position is not the same as the root block's top-left position, and the root block is intra/IBC prediction mode, the prediction mode is inferred as Intra prediction mode, no syntax needs to be signalled to indicate the prediction mode.
- In one embodiment, if the luma block's top-left position is not the same as the root block's top-left position, and the root block is Inter prediction mode, the prediction mode is inferred as Inter prediction mode, no syntax needs to be signalled.

For chroma block:
- In one embodiment, the prediction mode is inferred as Intra prediction mode.

- When IBC is enabled:

For luma blocks in the root block:
- In one embodiment, if the luma block's top-left position is not the same as the root block's top-left position, and the root block is Inter prediction mode, then the luma block is inferred as Inter prediction mode, no syntax needs to be signalled.
- In one embodiment, if the luma block's top-left position is not the same as the root block's top-left position, and the root block is intra/IBC prediction mode, and IBC is not allowed in the current block, the prediction mode is inferred as Intra prediction mode, no syntax needs to be signalled.

In one embodiment, if the top-left position of the luma block is not the same as the top-left position of the root block, if the root block is intra/IBC prediction mode, and if IBC is allowed in the current block, then only the IBC prediction flag needs to be signalled. If the IBC prediction flag is true, the prediction mode is IBC mode.

In one embodiment, if the top-left position of the luma block is not the same as the top-left position of the root block, if the root block is intra/IBC prediction mode, and if IBC is allowed in the current block, only the prediction mode flag needs to be signalled. If the prediction mode flag is true, the prediction mode is Intra mode.

For chroma block, in one embodiment, if IBC is not allowed in the current block and the prediction mode is inferred as Intra prediction mode, then no syntax needs to be signalled. In one embodiment, if IBC is allowed in the current block, only the IBC prediction flag needs to be signalled. If the IBC prediction flag is true, the prediction mode is IBC mode. In one embodiment, if IBC is disallowed in the current block, only the prediction mode flag needs to be signalled. If the prediction mode flag is true, the prediction mode is Intra mode.

### Method 9: Skip flag signalling when disallowing chroma partition split

The prediction mode signalling in the root block can be inferred as follows.
- When IBC is not enabled:
   For luma blocks in the root block:
      - In one embodiment, if the luma block's top-left position is not the same as the root block's top-left position, and the root block is intra/IBC mode, the skip flag needs not to be signalled, and is inferred as false.
   For chroma block, the skip mode cannot be applied, so no syntax for skip flag is required.
      - When IBC is enabled:
   For luma blocks in the root block:
      - In one embodiment, if the luma block's top-left position is not the same as the root block's top-left position, if the root block is intra/IBC mode and IBC is not allowed in the current block, the skip flag needs not to be signalled, and is inferred as false.

In another embodiment, if the skip flag is true, and the luma block's top-left position is not the same as the root block's top-left position, the root block is intra/IBC mode, then the prediction mode of the current block is inferred as IBC mode, no need to signal IBC flag. Otherwise (if the skip flag is true, and the luma block's top-left position is not the same as the root block's top-left position, the root block is Inter mode), the prediction mode of the current block is inferred as Inter mode.

For the chroma block, the skip mode cannot be applied, so no syntax for the skip flag is required.

The slice mentioned above can be one slice, one tile, one tile group, or one picture.

In VTM-6, the local dual tree is adopted to prevent the small chroma Intra CU for improving the processing throughput. For example, if a 128 luma samples CU is partitioned by ternary-tree (TT) split, and the SCIPU is coded in Intra mode, then the SCIPU is a local dual tree. In this SCIPU, the chroma block cannot be split and results in an 8x4 (i.e., 32 chroma samples) CU.

In the concept of local dual tree or SCIPU, it tries not to cause the chroma CU smaller than 16 chroma samples. However, a 32-chroma sample CU can be further split into two 16 chroma sample CUs without violating the constraint (i.e., not having the chroma CU with chroma samples less than 16 samples). To improve the coding efficiency, this kind of chroma CU can be further split into two chroma CUs by binary-tree (BT) split. For example, can be split into two 4x4 chroma CUs or two 8x2 chroma CUs. Similarly, if an SCIPU/local dual tree size is 8x16 in luma sample size, which is 4x8 in chroma sample size, it can be further split into two 4x4 chroma CUs or two 2x8 chroma CUs. To achieve this, in one embodiment, the BT split constraint is modified. When the tree-type of the current node/CU is equal to DUAL_TREE_CHROMA and the SCIPU modeType is equal to MODE_TYPE_INTRA, and the (cbWidth / SubWidthC ) ^{∗} (cbHeight / SubHeightC ) is equal to 32, or is larger than or equal to 32, the BT will not have to be disallowed (i.e., BT can be applied). However, when the tree-type of the current node/CU is equal to DUAL_TREE_CHROMA and the SCIPU modeType is equal to MODE_TYPE_INTRA, and the (cbWidth / SubWidthC ) ^{∗} (cbHeight / SubHeightC ) /2 is less than 16 samples, the BT is disallowed. In another example, when the tree-type of the current node/CU is equal to DUAL_TREE_CHROMAand the SCIPU modeType is equal to MODE_TYPE INTRA, and the (cbWidth / SubWidthC ) ^{∗} (cbHeight / SubHeightC ) is less than or equal to 16, the BT is disallowed.

In one embodiment, part of the original syntax is shown as follow. The variable allowBtSplit is derived as follows:
If one or more of the following conditions are true, allowBtSplit is set equal to FALSE:
- cbSize is less than or equal to MinBtSizeY
- cbWidth is greater than maxBtSize
- cbHeight is greater than maxBtSize
- mttDepth is greater than or equal to maxMttDepth
- treeType is equal to DUAL_TREE_CHROMA and (cbWidth / SubWidthC ) ^{∗} ( cbHeight / SubHeightC ) is less than or equal to 16
- treeType is equal to DUAL_TREE_CHROMA and modeType is equal to MODE-TYPE-INTRA.

The syntax can be modified as follow. The variable allowBtSplit is derived as follows:
If one or more of the following conditions are true, allowBtSplit is set equal to FALSE:
- cbSize is less than or equal to MinBtSizeY
- cbWidth is greater than maxBtSize
- cbHeight is greater than maxBtSize
- mttDepth is greater than or equal to maxMttDepth
- treeType is equal to DUAL_TREE_CHROMA and ( cbWidth / SubWidthC ) ^{∗} (cbHeight / SubHeightC ) is less than or equal to 16
- treeType is equal to DUAL_TREE_CHROMA and modeType is equal to MODE_TYPE_INTRA and the (cbWidth / SubWidthC ) ^{∗} (cbHeight / SubHeightC ) is less than or equal to 16.

In another embodiment, two conditions are added:
- btSplit is equal to SPL1T_BT_VER and treeType is equal to DUAL_TREE_CHROMA and cbWidth / SubWidthC is less than or equal to 4
- btSplit is equal to SPL1T_BT_VER and treeType is equal to DUAL_TREE_CHROMA and modeType is equal to MODE_TYPE_INTRA and the cbWidth / SubWidthC is less than or equal to 4.

In another embodiment, two conditions are added:
- btSplit is equal to SPLIT_BT_VER and treeType is equal to DUAL_TREE_CHROMA and cbWidth / SubWidthC is less than or equal to 4 and cbHeight / SubHeightC is less than or equal to 8
- btSplit is equal to SPLIT_BT_VER and treeType is equal to DUAL _TREE_CHROMA and modeType is equal to MODE_TYPE_INTRA and the cbWidth / SubWidthC is less than or equal to 4 and cbHeight / SubHeightC is less than or equal to 8.

Alternatively, the syntax can be modified as follow. The variable allowBtSplit is derived as follows:
If one or more of the following conditions are true, allowBtSplit is set equal to FALSE:
- cbSize is less than or equal to MinBtSizeY
- cbWidth is greater than maxBtSize
- cbHeight is greater than maxBtSize
- mttDepth is greater than or equal to maxMttDepth
- treeType is equal to DUAL_TREE_CHROMA and (cbWidth / SubWidthC ) ^{∗} ( cbHeight / SubHeightC ) is less than or equal to 16
- // treeType is equal to DUAL_TREE_CHROMA and modeType is equal to MODE_TYPE_INTRA //, where the text between the pair of "//" indicates deletion.

In another embodiment, one conditions are added:
- btSplit is equal to SPL1T_BT_VER and treeType is equal to DUAL_TREE_CHROMA and cbWidth / SubWidthC is less than or equal to 4.

In another embodiment, one conditions are added:
- btSplit is equal to SPL1T_BT_VER and treeType is equal to DUAL_TREE_CHROMA and cbWidth / SubWidthC is less than or equal to 4 and cbHeight / SubHeightC is less than or equal to 8.

Accordingly, it is proposed to enable the chroma CU to be further split (e.g. BT split) in an Intra type SCIPU or in a local dual tree when the chroma CU size is 32 chroma samples as described above.

Any of the foregoing proposed methods can be implemented in encoders and/or decoders. For example, any of the proposed methods can be implemented in Intra prediction or block partition of an encoder, and/or a decoder. Alternatively, any of the proposed methods can be implemented as a circuit coupled to the Intra prediction or block partition of the encoder and/or the decoder, so as to provide the information needed by the Intra prediction or block partition.

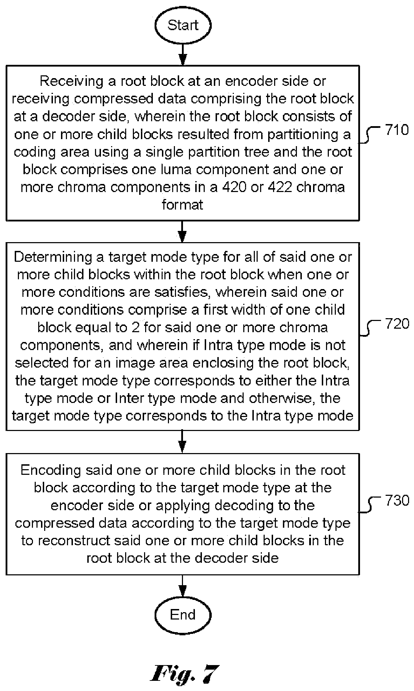

Fig. 7 illustrates a flowchart of an exemplary encoding and decoding system with constrained mode selection for small blocks according to an embodiment of the present invention. The steps shown in the flowchart, as well as other following flowcharts in this disclosure, may be implemented as program codes executable on one or more processors (e.g., one or more CPUs) at the encoder side and/or the decoder side. The steps shown in the flowchart may also be implemented based hardware such as one or more electronic devices or processors arranged to perform the steps in the flowchart. According to this method, a root block is received at an encoder side or compressed data comprising the root block are received at a decoder side in step 710, wherein the root block consists of one or more child blocks resulted from partitioning a coding area using a single partition tree and the root block comprises one luma component and one or more chroma components in a 420 or 422 chroma format. A target mode type for all of said one or more child blocks within the root block in step 720 when one or more conditions are satisfies, wherein said one or more conditions comprise a first width of one child block equal to 2 for said one or more chroma components, and wherein if Intra type mode is not selected for an image area enclosing the root block, the target mode type corresponds to either the Intra type mode or Inter type mode and otherwise, the target mode type corresponds to the Intra type mode. Said one or more child blocks in the root block are encoded according to the target mode type at the encoder side or said one or more child blocks in the root block are decoded according to the target mode type at the decoder side in step 730.

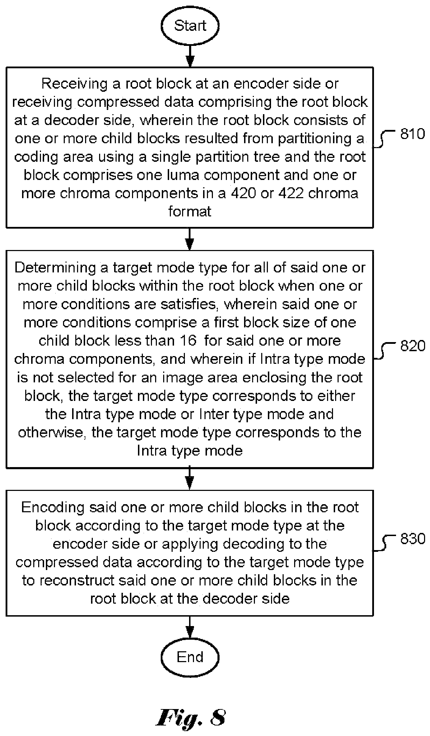

Fig. 8 illustrates another flowchart of an exemplary coding system with constrained mode selection for small blocks according to an embodiment of the present invention. According to this method, a root block is received at an encoder side or compressed data comprising the root block are received at a decoder side in step 810, wherein the root block consists of one or more child blocks resulted from partitioning a coding area using a single partition tree and the root block comprises one luma component and one or more chroma components in a 420 or 422 chroma format. A target mode type for all of said one or more child blocks within the root block in step 820 when one or more conditions are satisfies, wherein said one or more conditions comprise a first child block size less than 16 for said one or more chroma components, and wherein if Intra type mode is not selected for an image area enclosing the root block, the target mode type corresponds to either the Intra type mode or Inter type mode and otherwise, the target mode type corresponds to the Intra type mode. Said one or more child blocks in the root block are encoded according to the target mode type at the encoder side or said one or more child blocks in the root block are decoded according to the target mode type at the decoder side in step 830.

The flowcharts shown are intended to illustrate an example of video coding according to the present invention. A person skilled in the art may modify each step, re-arranges the steps, split a step, or combine steps to practice the present invention. In the disclosure, specific syntax and semantics have been used to illustrate examples to implement embodiments of the present invention. A skilled person may practice the present invention by substituting the syntax and semantics with equivalent syntax and semantics.

The above description is presented to enable a person of ordinary skill in the art to practice the present invention as provided in the context of a particular application and its requirement. Various modifications to the described embodiments will be apparent to those with skill in the art, and the general principles defined herein may be applied to other embodiments. Therefore, the present invention is not intended to be limited to the particular embodiments shown and described, but is to be accorded the widest scope consistent with the principles and novel features herein disclosed. In the above detailed description, various specific details are illustrated in order to provide a thorough understanding of the present invention. Nevertheless, it will be understood by those skilled in the art that the present invention may be practiced.

Embodiment of the present invention as described above may be implemented in various hardware, software codes, or a combination of both. For example, an embodiment of the present invention can be one or more circuit circuits integrated into a video compression chip or program code integrated into video compression software to perform the processing described herein. An embodiment of the present invention may also be program code to be executed on a Digital Signal Processor (DSP) to perform the processing described herein. The invention may also involve a number of functions to be performed by a computer processor, a digital signal processor, a microprocessor, or field programmable gate array (FPGA). These processors can be configured to perform particular tasks according to the invention, by executing machine-readable software code or firmware code that defines the particular methods embodied by the invention. The software code or firmware code may be developed in different programming languages and different formats or styles. The software code may also be compiled for different target platforms. However, different code formats, styles and languages of software codes and other means of configuring code to perform the tasks in accordance with the invention will not depart from the scope of the invention.

The invention may be embodied in other specific forms without departing from its essential characteristics. The described examples are to be considered in all respects only as illustrative and not restrictive. The scope of the invention is therefore, indicated by the appended claims rather than by the foregoing description. All changes which come within the meaning and range of equivalency of the claims are to be embraced within their scope.

## Claims

1. A method of video coding, the method comprising:
receiving (810) a root block at an encoder side or receiving compressed data comprising the root block at a decoder side, wherein the root block consists of one or more child blocks resulted from partitioning a coding area using a partition mode and the root block comprises one luma component and one or more chroma components in a 420 or 422 chroma format;
determining (820) a target mode type for all of said one or more child blocks within the root block when one or more conditions are satisfied, wherein said one or more conditions comprise a first block size of one child block less than 16 for said one or more chroma components, and wherein if an inferred Intra type mode is not selected for an image area enclosing the root block, the target mode type corresponds to either the Intra type mode or Inter type mode and otherwise, the target mode type corresponds to the inferred Intra type mode; and
encoding (830) said one or more child blocks in the root block according to the target mode type at the encoder side or applying decoding to the compressed data according to the target mode type to reconstruct said one or more child blocks in the root block at the decoder side.

2. The method of Claim 1, wherein the first block size of one child block for said one or more chroma components is equal to 4 or 8, and when the root block is in the 420 chroma format, a second block size of the root block for said one luma component is equal to 64 and the partition mode for the root block comprises quad tree partition, ternary vertical partition, ternary horizontal partition, binary vertical partition, or binary horizontal partition.

3. The method of Claim 1, wherein the first block size of one child block for said one or more chroma components is equal to 8.

4. The method of Claim 3, wherein when the root block is in the 420 chroma format, a second block size of the root block for said one luma component is equal to 128 and the partition mode for the root block comprises ternary vertical partition or ternary horizontal partition.

5. The method of Claim 3, wherein when the root block is in the 422 chroma format, a second block size of the root block for said one luma component is equal to 64 and the partition mode for the root block comprises quad tree partition, ternary vertical partition, or ternary horizontal partition.

6. The method of Claim 3, wherein when the root block is in the 422 chroma format, a second block size of the root block for said one luma component is equal to 32 and the partition mode for the root block comprises binary vertical partition or binary horizontal partition.

7. The method of Claim 1, wherein if the inferred Intra type mode is not selected for the image area enclosing the root block, a first syntax is signalled at the encoder side or parsed at the decoder side to indicate either the Intra type mode or the Inter type mode being selected for the root block.

8. The method of Claim 1, wherein the coding area corresponds to a coding tree unit.

9. The method of Claim 1 wherein the image area corresponds to a slice.

10. The method of Claim 9, wherein a second syntax is signalled at the encoder side or parsed at the decoder side in a slice header to indicate a coding type of the slice.

11. An apparatus of video coding, the apparatus comprising one or more electronic circuits or processors arranged to:
receive (810) a root block at an encoder side or receiving compressed data comprising the root block at a decoder side, wherein the root block consists of one or more child blocks resulted from partitioning a coding area using a partition mode and the root block comprises one luma component and one or more chroma components in a 420 or 422 chroma format;
determine (820) a target mode type for all of said one or more child blocks within the root block when one or more conditions are satisfies, wherein said one or more conditions comprise a first block size of one child block less than 16 for said one or more chroma components, and wherein if an inferred Intra type mode is not selected for an image area enclosing the root block, the target mode type corresponds to either the Intra type mode or Inter type mode and otherwise, the target mode type corresponds to the inferred Intra type mode; and
encode (830) said one or more child blocks in the root block according to the target mode type at the encoder side or apply decoding to the compressed data according to the target mode type to reconstruct said one or more child blocks in the root block at the decoder side.
